# EUROPEAN PATENT APPLICATION

(11) **EP 0 847 845 A1**
(43) Date of publication of application: **17.06.1998**
(21) Application number: 97121499.4
(22) Date of filing: 06.12.1997
(51) Int. Cl.: B29C 47/00, B29C 47/06

(54) **Thermoformable sheets having core layer with unmatted, oriented fibers and fiber-free cap layer**

(30) Priority: 10.12.1996 US 763139
(71) Applicant: HOECHST CELANESE CORPORATION, Summerville, New Jersey 08876 (US)
(72) Inventor: Prasad, Ravi, Charlotte, North Carolina 28210 (US); Murray, Christine R., Charlotte, North Carolina 28213 (US)
(74) Representative: von Kreisler, Alek, Dipl.-Chem.

(57) **Abstract**

A flat thermoformable sheet having a single extruded core layer (22) of thermoplastic polymer reinforced with unmatted, longitudinally oriented individual fibers may be directly bonded to one or more fiber-free cap layers (21,23). The one or more cap layers may be the same polymer as the core layer. The cap provides a smooth surface to the top and/or bottom of the thermoformable sheet and prevents fibers from protruding from the surface after thermoforming. Using the same thermoplastic polymer in the core layer and the one or more cap layers prevents delamination. The use of unmatted individual fibers in the core layer permits substantial orientation of the fibers in the longitudinal direction by extrusion and avoids the formation of bubbles or pin holes which tend to form when impregnating a fiber mat with thermoplastic. The orientation of the fibers in the core layer by extrusion under tension substantially increases the strength of the laminate in the longitudinal direction compared to the strength of the laminate in the transverse direction. The difference in strengths facilitates thermoforming and bending of the sheet longitudinally while providing resistance to bending laterally. The thermoformable, fiber reinforced sheets may be produced by coextrusion of the core (22) and one or more cap layers (21,23) or by extrusion of the core layer followed by lamination of one or more cap layers to the extruded core. The flat, reinforced sheets may be used for the production of thermoformed automobile parts, boat parts, hot tubs, and EMI shielded computer cases.

## Description

### FIELD OF THE INVENTION

This invention relates to thermoformable composite thermoplastic sheets reinforced with fibers, and thermoformable composite thermoplastic sheets reinforced with fibers having at least one fiber-free cap layer, and methods for their manufacture.

### BACKGROUND OF THE INVENTION

In the manufacture of shaped articles from flat panels of material, especially the mass production of such shaped articles, there are advantages to the use of plastics due to their low cost, ease of processing, light weight, low thermal conductivity, and resistance to chemical attack, corrosion and oxidation. Also, plastics may be colored and processed to provide a smooth and high glass surface. Accordingly, an additional finish layer is unnecessary, which is cost effective in comparison to materials that require a surface finish to provide the necessary aesthetic appeal.

However, plastics may not possess the strength or toughness required for certain applications, and a solution to this problem has been to incorporate reinforcing materials, especially fibrous reinforcing materials, in the plastic to make a composite material.

One method for manufacturing composite materials from plastics and fibers which has been used extensively is to use reinforcing filaments enclosed in a matrix of thermosetting plastic material, for example carbon filaments in epoxy resin. This type of composite material has proven useful in replacing certain metals as engineering materials where high strength and light weight are required. There are problems associated with manufacturing articles from thin type of composite material. Usually, the manufacturing process is labor intensive. Also, the thermosetting resins have a limited shelf-life and often must be refrigerated which requires space, energy and additional equipment. The same is also true for the case in which a "prepreg" is used, a sheet of uncured thermosetting resin which already has fibrous material incorporated into it. Additionally, thermosetting resins harden permanently, and after they are cured they may not be reshaped. Thus, even minor defects in the shaped article may give rise to the entire piece being discarded, because it nay not be reheated and reshaped.

Thermoplastic polymers do not have the storage problems associated with monomers for thermosetting polymers, because thermoplastic polymers have high molecular weights and do not require refrigeration. An additional advantage of using thermoplastic polymers is that they are thermoformable and thus can be formed into various shapes by an automated thermoforming process. Also, because they are thermoformable, in the event a defect in the shaping process occurs, it is possible to reheat and remold the composite thermoplastic article even after the initial molding process has taken place. Thus, there are certain advantages to the use of thermoplastic polymers instead of thermosetting polymers as a matrix material in filament reinforced composite materials. However, there are difficulties producing a composite sheet comprising reinforcing filaments in a matrix of thermoplastic polymer. Thermoplastic polymers have high viscosities and it is difficult to completely impregnate the fibrous reinforcing material without leaving air bubbles or pockets in the material. These air pockets can create surface imperfections in the thermoformed article or reduce the strength.

In one method used to form reinforced thermoplastic composite sheets, a long glass fiber mat is sandwiched between a glass fiber-filled layer of thermoplastic resin and a fiber-free layer of the resin, and laminated into a multi-ply product while the fiber-free resin layer is in a molten condition.

One of the problems with this method of manufacturing a reinforced thermoplastic composite material is the difficulty in coating substantially all of the fibers of the mat during lamination. This problem is particularly troublesome when mats having a high concentration of glass fiber or utilizing chopped glass fiber strands are employed. In order to alleviate the problem of incomplete coating or impregnation, it has often been necessary to reduce mat weight and filler concentration, increase resin quantity, utilize resin modifiers and decrease processing speeds. These process constraints increase the cost and reduce performance characteristics of the reinforced composite sheet.

Another method used to make a composite sheet having filaments in a matrix of thermoplastic polymer entails impregnating the reinforcing filaments in a solution of the thermoplastic polymer in a suitable solvent. The theory behind the method being that the solution has a lower viscosity than the thermoplastic polymer so the filaments are more thoroughly coated or impregnated. The solvent is then evaporated off and molding is carried out to provide the resultant shaped composite article. Composite materials manufactured by such a method suffer from several disadvantages. For instance, it is very difficult to completely evaporate off the solvent used to dissolve the polymer. Some solvent may become trapped in the composite material with the result that the composite material is to a certain extent, porous. This reduces its strength and sometimes leads to accelerated thermal degradation of the polymer if the composite material is subjected to elevated temperatures in use. Another disadvantage is that it is not usually possible to accurately monitor the actual amount of polymer which is coated or impregnated with the filaments. Some resin usually runs off the filaments with the result that the final polymer content of the composite material is lower than anticipated.

A fiber reinforced composite product should demonstrate mechanical properties such as high tensile, flexural and impact strength. In many applications, for example auto body panels, at least one smooth, defect-free surface is desired on the reinforced composite article after it has been formed.

In a typical forming process the composite blank, comprising layers of thermoplastic resin and fiber, is heated in a conventional oven, for example, by infrared or convection radiation to a temperature in the range of from about 200°C to about 375°C. During the initial heating in the oven the fibers expand, and this expansion results in lofting, or movement of the fibers into the resin surface layers.

Another problem in existing molding processes arises from conventional methods of heating the composite. Conventional heating during the molding operation relies primarily upon heat conduction from the outer surface layers to melt the inner bulk layer. Thus, a temperature gradient is established across the composite from the surface layer to the interior. Sufficient heating to ensure that the inner bulk layer has melted can result in an oversoftening of the surface layer resin, which in turn facilitates the lofting of fibers into the surface layer, which can cause surface roughness. The prolonged heating can also cause thermal decomposition of the resin.

Processes which disclose extruding a fiber-containing resin layer in the production of a laminate having a fiber-free cap layer wherein the fiber-containing resin layer and the fiber-free resin layer are the same polymer are U. S. patent no. 3,684,645 to Temple, et al, U. S. patent no. 4,240,857 to DellaVecchia, et al., U. S. patent no. 4,255,219 to DellaVecchia, U. S. patent no. 4,269,884 to DellaVecchia, et al., U. S. patent no. 4,471,018 to Kritchevsky, et al., U. S. patent no. 4,612,238 to DellaVecchia, et al, and U. S. patent no. 4,716,072 to Kim.

However, in the process disclosed in U. S. patent no. 3,684,645 a mat of fibers is impregnated with extruded molten resin which may or may not contain fibers. If the extrudate does not contain fibers, then the core is reinforced with a mat of fibers. If the extrudate does contain fibers then the cap is not fiber free.

In the processes of the above-identified DellaVecchia and Kritchevsky, et al. patents, a fiber mat is positioned between the extruded core and the extruded cap layers. The extruded cap layers may or may not contain short fibers. The extruded resin core impregnates the fiber mat. The cap layer is then formed, usually by extrusion, and laminated to the reinforced core.

In the process of U. S. patent no. 4,716,072, the extruded, fiber-containing resin impregnates a fiber mat. A fiber-free outer layer is laminated to a bulk layer comprising fiber mat compounded with thermoplastic resin filled with chopped fibers. The fiber-free layer has a higher melt viscosity than the bulk layer.

U. S. patent no. 3,607,616 to Barbehenn, et al. discloses a core of polypropylene fiber batting impregnated with amorphous polypropylene laminated to at least one and preferably between two sheets of crystalline polypropylene. The fiber-free crystalline polypropylene films may be produced by extrusion or coextrusion and laminated to a sheet or layer of batting impregnated with amorphous polypropylene. A shrinkable film or sheet for packaging with randomly arranged fibers in the core portion is disclosed.

Patents which disclose the use of only unmatted reinforcing fibers in a core which is capped with a fiber-free layer of the same polymer are U. S. patent no. 3,765,998 to Oswald, et al. and U. S. patent no. 5,260,017 to Giles, Jr. U.S. patent no. 3,765,998 to Oswald, et al. discloses fibrous mat-reinforced PET bonded to a layer which consists of unfilled or inorganic mineral filled PET sheet. Oswald discloses that it is not absolutely necessary to use a non-woven mat and loose glass fibers can be used if the volume level of asbestos in the resin is increased sufficiently to increase the viscosity to an appropriate level.

U. S. patent no. 5,260,017 to Giles, Jr. and U. S. patent no. to 5,188,778 to Wallace, et al., disclose processes for improving the surface quality of fiber reinforced thermoplastic material where the reinforced core, or substrate, is formed by the water and surfactant dispersion process and then consolidated into an impermeable sheet comprising thermoplastic and short fibers. Giles, Jr. discloses that the composites may also include an outer cap layer of fiber free resin to further improve the surface smoothness of the compression molded article. The reference teaches away from the use of matted fiber and uses dispersed individual fibers to reduce surface profile problems and to obtain superior surface smoothness. The smooth surface is obtained by placing a heated mold insert between the sheet and the mold immediately prior to compression molding. In the Wallace, et al. process, a glass mat-reinforced thermoplastic sheet material is made from a mixture of chopped glass fibers, polypropylene powder and an inorganic filler. Wallace, et al., disclose coating the core material with a fiber free composition of thermoplastic and filler, pressing the material between steel plates at 200°C and then allowing the sheet to cool in the press in order to form a composite sheet with a smooth surface and no protruding fibers.

There are many references which disclose a thermoformable sheet having a fiber mat reinforced core and a fiber-free or fiber-containing cap wherein the same thermoplastic is used for the core and the cap. These references include: U. S. patent nos. 3,684,645 to Temple, et al., 3,765,998 to Oswald, et al., 4,240,857 to DellaVecchia, et al., 4,255,219 to DellaVecchia, 4,269,884 to DellaVecchia, et al., 4,291,084 to Segal, 4,414,266 to Archer, et al., 4,445,951 to Lind, et al., 4,469,543 to Segal, et al., 4,471,018 to Kritchevsky, et al., 4,590,027 to Murphy, et al., 4,612,238 to DellaVecchia, et al., 4,622,192 to Ma, 4,716,072 to Kim, 4,778,717 to Fitchmun, 4,788,088 to Kohl, 4,814,224 to Geibel, et al., 4,873,133 to Giles, Jr., 4,931,358 to Wahl, et al., 4,944,974 to Zachariades, 4,983,247 to Kim, 5,075,142 to Zufiroghi, 5,160,472 to Zachariades, 5,175,198 to Minnick, et al., 5,188,778 to Wallace, et al., 5,194,190 to Kim, 5,236,776 to Fitchmun, et al., 5,264,060 to Lambing, et al., 5,312,669 to Bedard, and 5,354,604 to Blakeman, et al.

U. S. patent no. 4,414,266 to Archer, et al., discloses a method of making a thermoformable sheet of at least 90% amorphous polyethylene terephthalate (PET) suitable for use in automotive body panels. In order to minimize the formation of crystalline PET in the process, the sheet is quenched from the molten state extremely quickly. Although short fibers (less than 1 cm) may be used as an additive to the PET, the layers of fibrous reinforcement material should have a staple fiber length of 1 cm or more. Preferably, the layers of fiber are introduced into the sheet in the form of a mat composed of layers of fibers held together by needling or by binder compatible with PET to form a loose cohesive web. It is disclosed as advantageous to embed the central fiber layers within a central layer of PET before applying the outer layers of PET to reduce the possibility of fiber becoming exposed at the surface of the sheet.

U. S. patent no. 4,983,247 to Kim discloses a process for producing a resin rich surface layer on a shaped sheet of composite thermoplastic material to obtain a Class A smooth, glossy surface for automotive exterior parts. The smooth, resin rich surface layer is formed and bonded to the fiber mat-reinforced core during the process of molding the article into the desired shape.

U. S. patent no. 5,312,669 to Bedard discloses a core which consists essentially of bonded internal layers of impregnated oriented fibers. At least one or both outer surfaces are constructed of thermoplastic film devoid of any fibers. Ski boots and prosthetic devices made from the composite are disclosed.

Patents which disclose a fiber-containing core and a cap layer but which do not specifically disclose that the cap polymer and core polymer are the same are: U. S. patent nos. 4,302,269 to Steinberg, et al., 4,380,523 to Lind, et al, 4,859,524 to Kim, et al., 5,318,737 to Trabert, et al., and 5,458,966 to Matsumoto, et al.

U. S. patent no. 4,892,774 to Vallance discloses a fiber-free core and fiber-containing cap layers.

U. S. patent no. 4,957,805 to Biggs, et al. discloses laminated reinforced thermoplastic sheets made from porous sheets each having 20% to 60% reinforcing fibers and made of different thermoplastics.

U. S. patent no. 5,476,628 to Baumgartl, et al. discloses a product using polymer/fiber waste where the recyclate core may have fiber webs bonded to the surface.

EPO 643091 Al discloses laminating a mat to an extruded fiber-containing sheet. The sheet does not have a cap.

Japanese patent publication no. 4135742 discloses depositing cut fibers having adhered resin powder onto a belt and superimposing a thermoplastic resin sheet on one or both sides of the deposited fibers. Extrusion of a fiber-containing melt is not shown.

Another approach to producing shaped articles comprising polymer reinforced with fiber is to use an injection molding process. There are various injection molding methods for producing reinforced articles by using fibrous preforms positioned in a mold. The U. S. patents discussed below all form a shaped, reinforced product. Processes are disclosed for forming shaped products from both thermosetting as well as thermoplastic resins.

A reaction injection molding (RIM) process for preparing automotive parts having horizontal or vertical surfaces with a class A surface is disclosed in U. S. patent no. 5,391,344 to Rains, et al. In the process, one or more surfacing veils are placed in the mold having an SPI - SPE polished rating of 3 or more.

U. S. patent no. 5,000,990 to Freeman discloses a process for making hollow automobile doors from a curing resin which utilizes a pressurizable support inside the mold.

U. S. patent no. 5,424,021 to Nakade, et al. discloses a RIM process for making shock-resistant shaped articles with high fiber content.

U. S. patent nos. 3,761,560 to Newlove, 5,204,042 to James, et al., 5,266,259 to Harrison, et al. and 5,424,017 to Hinduja, et al. disclose various molding techniques and/or molds to ensure that fiber wetting and consolidation occurs when the curable resin is injected into the mold. Newlove discloses pinching off a glass fiber mat between the edges of the mold dies when using thermosetting resins. Similarly, U. S. patent no. 4,986,948 to Komiya, et al. discloses a molding process utilizing either thermosetting or thermoplastic resins where the fibers are pinched at the edge of the mold.

U. S. patent nos. 5,275,776 and 5,424,020 to Hara, et al. disclose a method for producing a molded article of fiber reinforced thermoplastic resin where a film or sheet of resin (B) is placed in the mold to enhance surface properties of the article. The film resin (B) is not disclosed as being the same as the resin (A) injected to form the fiber-reinforced core.

U.S. patent no. 5,308,570 to Hara, et al. discloses forming a multilayer, fiber-reinforced, molded article having a skin of olefinic thermoplastic elastomer fusion bonded to a fiber reinforced core of polypropylene.

The present invention provides a thermoformable, thermoplastic, fiber-reinforced sheet. The individual, unmatted fibers are substantially oriented in the longitudinal direction, which enhances the strength of the sheet along its longitudinal axis. The orientation of the fibers in the longitudinal direction facilitates bending in the longitudinal direction during thermoforming while avoiding protrusion of fibers from the surface along the bend. The sheet may also have a non-fiber containing thermoplastic film or cap on the top and/or bottom of the reinforced layer wherein the thermoplastic in the cap and the reinforced layer may be the same.

The cap provides a smooth surface and prevents fibers from protruding from the surface after thermoforming. Use of the same thermoplastic in the cap and core prevents delamination.

The present invention also provides an extrusion process for manufacturing the fiber-reinforced sheet. In the process, unmatted fibers are extruded in a molten polymer wherein the extrusion orients the fibers in the longitudinal direction, or direction of extrusion. This provides a substantial increase in the strength of the laminate in the longitudinal direction compared to the strength in the transverse direction. Bubbles or pin holes in the laminated product are avoided by the extrusion process, because the impregnation of a fiber mat is not required.

### SUMMARY OF THE INVENTION

A substantially flat thermoformable sheet having a single extruded core layer of thermoplastic polymer reinforced with unmatted, longitudinally oriented individual fibers may be directly bonded to one or more fiber-free cap layers. The present invention also provides a single extruded core layer of thermoplastic polymer reinforced with essentially only unmatted, longitudinally oriented individual fibers. The flat, thermoformable sheet without a cap layer may be thermoformed and subsequently coated or finished. To eliminate a finishing step and also to minimize the effect of fiber lofting in the thermoformed article, one or more cap layers may be used on the reinforced core layer. The one or more cap layers are preferably the same polymer as the core layer. The cap provides a smooth surface to the top and/or bottom of the thermoformable sheet and prevents fibers from protruding from the surface after thermoforming. Using the same thermoplastic polymer in the core layer and the one or more cap layers prevents delamination by increasing the strength of the bond between the cap and core layers, relative to the strength of the bond obtained using different materials.

The use of unmatted individual fibers in the core layer permits substantial orientation of the fibers in the longitudinal direction by extrusion under tension and avoids the formation of bubbles or pin holes which tend to form when impregnating a fiber mat with thermoplastic. Extrusion conditions and equipment are selected to minimize or eliminate fiber breakage in the extrudate. Preferably, resin material containing long fiber reinforcement is used to form the fiber containing layer. The orientation of the fibers in the core layer by extrusion under tension substantially increases the strength of the laminate in the longitudinal direction compared to the strength of the laminate in the transverse direction by a factor of from about 1.1:1 to about 10:1, preferably from about 2:1 to about 4:1. The tension does not substantially orient or stretch the film in the longitudinal or machine direction. The increase in strength in the longitudinal direction is at least substantially the result of orienting the longitudinal axes of the individual fibers in substantially the same direction, the direction of extrusion or the machine direction. The longitudinal orientation of the individual, unmatted fibers, and the tensile strength in the longitudinal direction are at least substantially uniform across the width of the sheet. The tensile strength of the sheet in the longitudinal direction may be from about 30% to about 90%, preferably from about 35% to about 60%, of the strength of a reinforced sheet of the same material formed from an injection molding process thereby facilitating thermoformability.

Multilayer sheets may be extruded with a multi-manifold die to minimize the effect of the different viscoelastic properties of the cap and core layers. Tensioning of the extruded sheet may be achieved by feeding the sheet into the nip of a single set of counterrotating rollers or by using a vertical three roll stack having two nips. The rollers are preferably heated, especially in the case of capped sheets, to impart good surface qualities to the thermoformable sheet. The tensioning may reduce the width of the extruded sheet from about 0.5% to about 5.0% between the exit of the die and the first point of contact with the rollers.

The difference in strengths facilitates thermoforming and bending of the sheet longitudinally while providing resistance to bending laterally. This facilitates the thermoforming of stepped articles, giving high strength where needed combined with good formability and smooth surfaced bends. The use of conductive fibers, such as metallic, or carbon fibers provides thermoformable, electrically conductive polymer sheets which may be employed for electromagnetic interference (EMI) shielding applications.

The thermoformable, fiber reinforced sheets may be produced by coextrusion of the core and one or more cap layers or by extrusion of the core layer followed by lamination of one or more cap layers to the extruded core. The flat, reinforced sheets may be used for the production of thermoformed automobile parts and boat parts, hot tubs, computer cases, or any shaped article where a fiber reinforced composite article is desirable.

### BRIEF DESCRIPTION OF THE DRAWINGS

Fig. 1 is a side view of the extrusion process of the present invention of a core layer, showing the extruder in partial cross section.

Fig. 2 is a perspective, schematic view showing the extruded sheet of Fig. 1 at the die exit and entering the rollers.

Fig. 3 is a side view of the extrusion process of the present invention of a sheet with a single cap, showing the extruders in partial cross section.

Fig. 4 is a side view of the extrusion process of the present invention of a sheet with two caps, showing the extruders in partial cross section.

Fig. 5 is a side view of the extrusion process of the present invention of a sheet with two caps, showing a die with a flow splitter, and the extruders in partial cross section.

Fig. 6 is a side view of a three roll vertical stack.

### DETAILED DESCRIPTION OF THE INVENTION

A flat thermoformable composite sheet comprising a single, unitary core layer of thermoplastic polymer reinforced with unmatted, longitudinally oriented individual fibers in accordance with the present invention achieves substantially increased strength of the sheet in the longitudinal direction, the direction of extrusion, compared to the strength of the sheet in the transverse direction. The difference in strengths facilitates thermoforming and bending of the sheet longitudinally while providing resistance to bending laterally. Longitudinal orientation of the individual, unmatted fibers and the tensile strength in the longitudinal or machine direction are at least substantially uniform across the width of the sheet.

In the process in accordance with the present invention, thermoplastic polymer and unmatted individual fibers are extruded through a die to form a sheet and the fibers are oriented in the longitudinal direction during the process. The use of individual unmatted fibers avoids the production of bubbles and pin holes which tend to form when impregnating a fiber mat. In embodiments of the invention, the process includes maintaining tension on the sheet as it exits the die to orient the fibers in the longitudinal direction or direction of extrusion through the die.

In another embodiment of the process in accordance with the present invention, one or more fiber free cap layers comprising thermoplastic polymer are directly bonded to the fiber reinforced core layer and a laminate sheet is formed. The laminated sheet may be formed by combining fiber free and fiber containing extruded streams in a die and extruding them together or by laminating the layers after they have been extruded. In preferred embodiments, the thermoplastic in the core and the cap layers are the same to provide excellent bonding strength and resistance to delamination. The cap layer also provides a smooth surface to the top and/or bottom of the thermoformable sheet and maintains that smooth surface after thermoforming by preventing fibers from protruding from the surface.

The width of the reinforced sheet in accordance with the present invention may be up to about 54 inches, however greater widths may be achieved, depending on the equipment used. The thickness of either or both cap layers may be from about 5 mils to about 85 mils, preferably from about 10 mils to about 60 mils, most preferably from about 20 mils to about 40 mils. When two cap layers are present, they may be the same or different thickness. The thickness of the reinforced core layer may be up to about 150 mils, whether capped or uncapped, and is preferably from about 40 mils to about 100 mils. The thickness of a laminate sheet having at least one cap is less than about 200 mils, preferably less than about 150 mils.

The thermoplastic resin used to form the core and cap of the sheet in accordance with the present invention may be polyolefins such as polyethylene or polypropylene, various nylon resins such as nylon 66, thermoplastic polyurethane, polyacetal, polyphenylene sulfide, polycarbonate, polycarbonate-acrylo-nitrile butadiene styrene (ABS) copolymers, polyesters, such as polyethylene terephthalate (PET), or copolymers or blends of these or other thermoplastic resins. The individual unmatted fibers may comprise glass fibers, carbon or graphite fibers, various metal fibers such as stainless steel, various ceramic fibers, DuPont KEVLAR brand aramid fibers, or any other fiber material suitable for reinforcing a E0 ohm-cm to about E6 ohm-cm thermoplastic resin. Thermoformable, electrically conductive reinforced sheets for EMI shielding applications may be obtained by the use of electrically conductive fibers such as metal fibers or carbon fibers. Exemplary volume resistivities may range from about E0 ohm-cm to about E6 ohm-cm.

The amount of fiber in the core relative to the amount of thermoplastic resin in the single layer uncapped sheet, or in the reinforcing layer of the multilayer sheet may vary from about 5% by weight to about 60% by weight, preferably from about 30% by weight to about 55% by weight, fiber, based upon the weight of the thermoplastic resin. Enough resin material should be present to thoroughly cover or enrobe each of the individual unmatted fibers so that the fibers are thoroughly embedded in the thermoplastic resin and no pin holes or bubbles are present. The weight percent of fiber may be adjusted to meet the processing needs relating to the particular end use of the reinforced sheet. Increasing the amount of fiber will increase the strength of the sheet up to the point that the sheet becomes stiff and is not easily thermoformed, at which point an effective maximum fiber concentration has been reached. In embodiments of the invention, the length of the individual, unmatted fibers may range from about 0.25 inch to about 2.5 inches, preferably from about 0.5 inch to about 1.0 inch. The process of the invention and the reinforced sheet in accordance with the present invention may be achieved with fibers having a diameter of about 0.0004 inches (about 10 microns), however, the invention is not limited to this fiber diameter and good results may be achieved with larger or smaller fiber diameters. Exemplary fiber diameters which may be used range from about 5 microns to about 30 microns.

Fillers, stabilizers, colorants, pigments, fire retardant agents, bonding additives, fiber wetting agents and other additives may be incorporated into the fiber and thermoplastic resin mixture of the core or the fiber free mixture of the cap to aid in the processing of the core or cap material or impart certain physical properties to the core or cap material, for example, chemical resistance, flame retardancy or UV resistance.

Preferably the core is manufactured by using long fiber reinforced thermoplastic (LFRTP) resins such as those described in U.S. Patents 4,439,387, 4,312,917 and U.S. Reissue Patent 32772, all to Hawley. The disclosures of these three Hawley patents are incorporated herein by reference in their entireties. LFRTP resins are marketed under the trademark CELSTRAN® by Polymer Composites, Inc. of Winona, Minnesota. The process of making LFRTP resins comprises imbedding continuous length fiber strands in a thermoplastic resin material using an extruder.

The process of making LFRTP resins as disclosed in the above referenced patents involves feeding the thermoplastic resin material into a standard extruder having an electric resistance heater mounted outside the extruder barrel. The thermoplastic resin is heated by frictional forces and the extruder heater and passes through a heated die. Fiber strands are introduced into the heated die by means of feed ports into the upper half of the die. A series of lobes are formed to ensure that the resin and fibers take a convoluted route through the die and the fiber strands must pass over at least one of the lobes such that the thermoplastic resin thoroughly contacts and coats each fiber strand and each fiber strand becomes completely imbedded within the thermoplastic resin. Thus, the fiber strands become thoroughly imbedded in the thermoplastic resin as they pass through the die and are extruded through a forming die to create a formed extrusion containing long fiber strands imbedded in thermoplastic resin. This formed extrusion may be fed into a sizing die to impart a particular shape, cooled, and cut to a specific length.

Also, as an alternative to using a resin which contains impregnated fibers as a feedstock to the extruder, individual fibers and fiber free thermoplastic resin may be fed separately into an extruder to form a reinforced core.

Preferably, any resin used for a cap or a core material is dried under conditions of heat and/or vacuum to substantially or essentially completely eliminate moisture.

The extruder for producing the flat, fiber-reinforced sheets of the present invention may be single stage or multi-stage, and is preferably single screw. The extruder may also have multi-zone heating capability as well as a feed throat heater. In order to achieve the optimum product quality in the thermoformable composite reinforced sheet, it is important to minimize the air trapped in the sheet during the extrusion process. The presence of trapped air tends to decrease mechanical properties such as strength as well as leading to air bubbles forcing a passage from the sheet interior to the surface of the sheet during the thermoforming heating cycle. This phenomena is similar to the devolatization of polymer melts, and in the sheet product can cause surface defects in addition to decreased strength. In order to reduce or eliminate the trapped air pockets or bubbles and achieve thorough impregnation of the fiber strands with resin, in embodiments of the invention a multi-stage vented extruder may be used. Preferably a vacuum is applied to the vent to improve air elimination. Reducing the throughput of resin and fiber through the extruder will also lessen air entrapment, but this negatively impacts manufacturing productivity and sheet line speed. Line speed of the sheet exiting the extruder may be from about 0.5 feet/minute to about 6 feet/minute, preferably from about 2.5 feet/minute to about 3.5 feet/minute. In embodiments of the invention, the process of manufacturing the substantially flat, reinforced thermoformable sheet results in a sheet product that is substantially free from air bubbles or pin holes due to the unmatted, individual fibers being substantially impregnated with the thermoplastic.

The mechanical properties of the fiber-filled sheet will be degraded if: (1) the fibers are broken into shorter lengths, or (2) the fibers agglomerate due to the non-compatibility of the polymer/fiber systems, and/or (3) flow induced segregation of the fiber in the polymer melt occurs. Both fiber breakage and agglomeration can be controlled by careful design of the extruder, extruder screw and the sheet die used to manufacture the sheet. These factors may need to be considered for each polymer/fiber system. Factors such as optimizing screw flights, depth of flights, screw/barrel clearance, barrel length, number of heating zones, and compression ratio may be considered for a polymer/fiber system to minimize fiber breakage and fiber agglomeration. For example, greater clearance between the screw and barrel will tend to lessen fiber breakage. However, if the clearance is too great the extruder will exhibit a non-uniform temperature profile because the heat from the extruder barrel will not transfer effectively into the polymer at the walls of the extruder. This is because the polymer is a good insulator and there is less mixing at the wall. This factor should be considered together with the depth of flights, which may be increased to promote better mixing. If the depth of flight is increased too much, the mixing increases to the extent that flow inside the extruder may become turbulent, and fiber breakage will result. Longer extruder barrels with multizone heating are generally preferable, because the polymer is heated slowly and uniformly.

In embodiments of the invention, the individual fibers in the single layer reinforced sheet, and the fibers in the reinforcing layer of the multilayer sheet are substantially unbroken after extrusion and remain at least substantially the same length as they were prior to extrusion.

The melt pump and melt filter are removed, if present, from extrusion equipment in accordance with the process of the present invention because they break up and/or remove fibers from the extrudate. The removal of the melt pump requires a higher than normal pressure in the extruder in order to compensate for pressure drop and achieve good flow of material through the die. Exemplary extruder pressures may range from about 200 psi to about 3000 psi.

Extruder and die temperatures employed depend upon the composition of the thermoplastic polymer. Generally, the temperatures employed should be sufficiently high to permit orientation of the fibers within the flowing polymer melt without substantial degradation of the polymer. In embodiments of the invention, the temperatures employed may be from about 1°F to about 30°F above the melting point of the polymer.

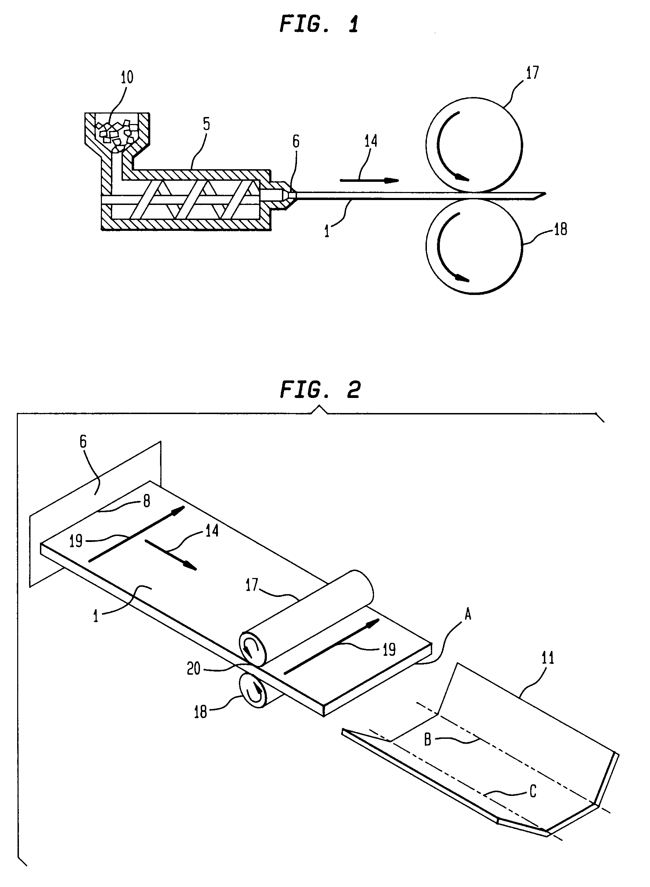

As shown in Fig. 1, the process of forming a substantially flat, reinforced thermoformable sheet 1 comprises the steps of feeding a composition 10, for example long fiber reinforced thermoplastic resin particulates, comprising thermoplastic resin and unmatted, individual fibers into an extruder 5. The composition 10 comprising thermoplastic resin and unmatted, individual fibers is extruded through a die 6 to form an extruded sheet 1, wherein after being extruded through the die 6, the fibers are substantially oriented in the direction of extrusion 14. In the process in accordance with the present invention, the extrusion conditions result in orientation of the fibers in the longitudinal direction 14 as they pass through the die 6. Orientation results in part due to die design and configuration and processing conditions in the extruder wherein the individual unmatted fibers are able to align themselves in the direction of flow as they pass through the die 6. Orientation of fibers also results due to embodiments of the invention wherein tension is applied to the extruded sheet 1 as it exits, and after it exits the die 6 to orient the fibers in the direction of extrusion 14. Substantial orientation of the fibers in the direction of extrusion occurs without substantially orienting or stretching of the thermoplastic film. The substantially greater strength in the longitudinal or machine direction compared to the strength in the transverse direction is at least substantially due to orientation of the longitudinal axes of the individual fibers in the direction of extrusion.

As shown in Fig. 1, in embodiments of the invention the process of forming a substantially flat, reinforced thermoformable sheet comprises a step wherein tension is applied to orient the fibers in the extruded sheet 1 in the longitudinal direction 14 by passing the extruded sheet 1 through a nip of a pair of counterrotating rollers 17 and 18. Rollers 17 and 18 may be heated or cooled, and in preferred embodiments they are heated. As shown in Fig. 2, in embodiments of the invention the process of forming a substantially flat, reinforced thermoformable sheet 1 further comprises applying tension to reduce the dimension of the sheet in the transverse direction 19, i.e. the transverse dimension, of the extruded sheet 1 from about 0.5% to about 5.0% at the point of contact 20 with the rollers 17 and 18, relative to the transverse dimension of the sheet 1 at the die exit 8. For example, the sheet may exit a 54 inch die and be reduced in width to about 52 inches to 53 inches at the point of contact with the rollers.

While not intending to be bound by any explanation of the physical process by which the fibers in the sheet 1 become longitudinally oriented after extrusion, it appears that the proper extrusion conditions contribute to the freedom of the fibers to align themselves as they exit the die 6, and also the tensile or pulling force applied by, for example, the rollers 17 and 18 combine to orient the longitudinal axes of the fibers in the longitudinal direction 14. In embodiments of the invention, the substantially flat, reinforced thermoformable sheet 1 comprising longitudinally oriented, unmatted individual fibers has substantially increased strength in the longitudinal direction 14 in comparison to the strength of the thermoformable sheet in the transverse direction 19. After the sheet 1 has been formed, and the individual fibers have been oriented in the longitudinal direction, the sheet 1 may be cut into an individual sheet 11, for example along a transverse axis such as cut line A shown in Fig. 2. The greater strength in the longitudinal direction facilitates thermoforming and bending of the sheet along a longitudinal axis and provides resistance to bending along a transverse axis. This is shown, for example, by the bends in individual sheet 11 along longitudinal axes B and C.

The reinforced, substantially flat, thermoformable sheet of the present invention may be thermoformed into parts for boats, automobiles, hot tubs, computer cases, or any other application where a shaped composite sheet is desired. The shaped composite sheet may be coated with a finish layer, for example gelcoat as is used in the manufacture of boat parts.

When a fiber reinforced sheet is thermoformed, the fibers in the polymeric matrix tend to move toward the surfaces of the sheet, and because the polymer matrix of the sheet has been softened by heating, the fibers often appear at the surfaces of the sheet. This phenomena is often called "lofting" of the fibers. The presence of a capped layer can prevent lofting. Table I shows the results of placing different thickness cap layers on both sides of an uncapped fiber reinforced sheet. Lofting was measured as a percentage increase in the thickness of the sheet after heating in an oven for different times and temperatures. Table I shows that cap layers substantially decrease the amount of lofting present after heating.

**TABLE 1**

| **Lofting Study** | | | | | | |
|---|---|---|---|---|---|---|
| **SHEET SAMPLE** | **INITIAL THICKNESS** | **THICKNESS AFTER HEATING** | | | | |
| | **MILS** | **180°C 15 Min. Mils.** | **185°C 15 Min. Mils.** | **185°C 20 Min. Mils.** | **185°C 25 Min. Mils.** | **FINAL LOFT %** |
| Uncapped | 101 | 120 | 123 | 135 | 165 | 63 |
| 24 mil cap (both sides) | 122 | 131 | 127 | 140 | 138 | 13 |
| 40 mil cap (both sides) | 155 | 159 | 158 | 162 | 166 | 7 |
| 48 mil cap (both sides) | 167 | 171 | 175 | 173 | 177 | 6 |
| 64 mil cap (both sides) | 197 | 201 | 201 | 203 | 204 | 4 |
| 80 mil cap (both sides) | 233 | 234 | 234 | 238 | 239 | 3 |

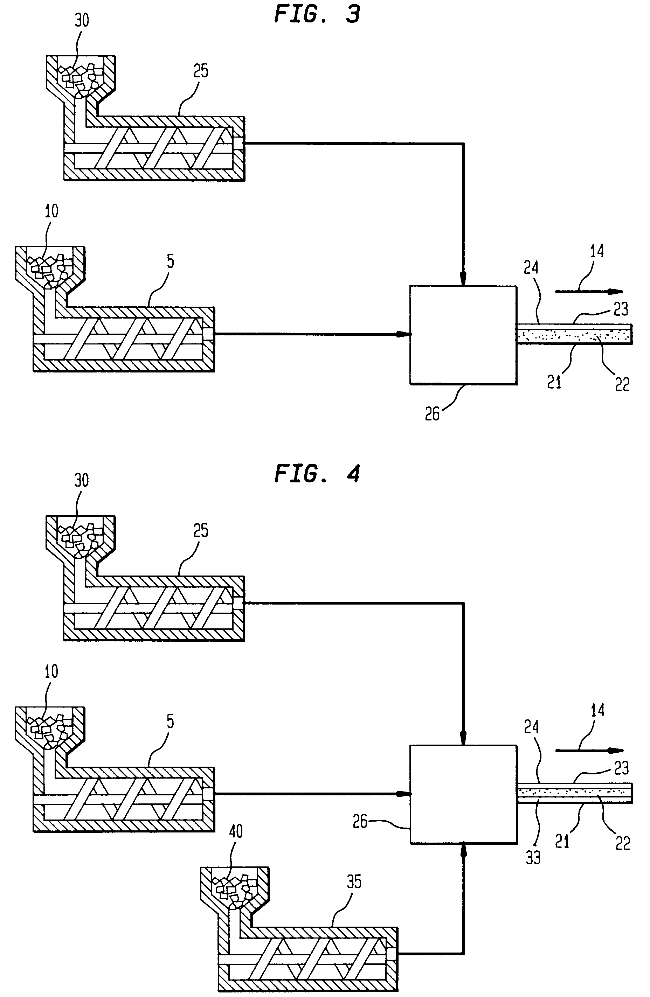

In certain applications, it is desirable to form the shaped composite sheet and obtain a finished part having at least one smooth surface, without the need for subsequent coating and/or finishing steps. As shown in Fig. 3, the process of forming a substantially flat, reinforced thermoformable sheet 21 having at least one smooth surface 24 comprises the steps of forming a reinforcing layer 22 by extruding a composition 10 comprising thermoplastic resin and unmatted, individual fibers, and feeding the extrudate into a sheet forming die 26. The fiber-free cap layer 23 is formed by extruding a composition 30 comprising thermoplastic resin from a second extruder 25 into the die 26. The cap layer 23 is directly bonded to one surface of reinforcing layer 22 in the sheet forming die 26 to form a reinforced, laminated sheet 21 having a cap layer 23 with a smooth surface and a reinforcing layer 22. In embodiments of the invention, the reinforcing layer 22 and the fiber-free cap layer 23 are the same thermoplastic. This facilitates the direct bonding of the cap 23 and the reinforcing layer 22.

The cap and the reinforcing layer may be directly bonded without the use of an adhesive. Veil layers are also not needed. They tend to interfere with the bonding process. The temperature at which the at least one cap layer and reinforcing layer are laminated together in the die will depend upon the composition of the thermoplastic, but it should be sufficient to achieve thermal bonding between the layers. This is also the case if individual sheets are laminated together in a separate step, for example, in a lamination press. Direct bonding of the cap 23 and the reinforcing layer 22 results in a laminate sheet with excellent resistance to delamination. The bond is continuous and uniform across the entire width of the sheet. Providing a cap layer and a reinforcing layer made from the same thermoplastic improves the direct bonding process by facilitating thermal bonding. Exemplary bonding or lamination temperatures may range from about 1EF to about 30EF above the melting point of the polymer composition.

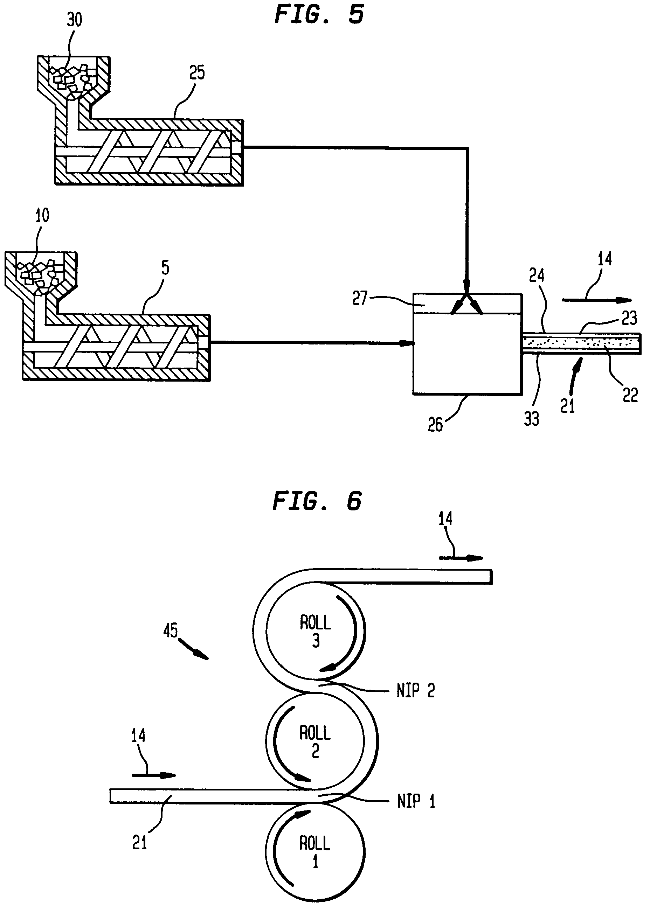

If a laminate sheet having smooth surfaces on both sides is desired, a second fiber-free cap layer 33 may be formed by extruding a composition 40 comprising thermoplastic resin from an extruder 35 into sheet forming die 26, as shown in Fig 4. The second cap layer 33 is directly bonded to the surface of the reinforcing layer 22 in the die 26 on the opposite side of the reinforcing layer from the first cap layer 23. As shown in Fig. 4, a separate extruder 35 may be used, if different cap materials 30 and 40 are used for the first and second cap. As shown in Fig. 5, in embodiments of the invention, one extruder 25 may be used to supply die 26 with material 30 for both of the fiber-free thermoplastic cap layers 23 and 33. As shown in Fig. 5, flow splitter 27 is provided upstream of the die 26, and serves to split the fiber-free extrudate into two discrete flows, one for each of the cap layers. The die may be adjusted so that the cap layers are the same or different thicknesses.

The die used for extrusion of the uncapped fiber reinforced sheet may be a conventional sheeting die suitable for single layer extrusion, with a configuration that allows the individual, unmatted fibers to align themselves longitudinally as they exit the die. For example, the sheeting die may have a hangar-like configuration where the width gradually increases from upstream to the downstream exit.

The die used for extrusion of a sheet having a reinforced layer and two caps may be a feedblock type die. Feedblock coextrusion refers to a process in which each of a supply of a first plastic material (for example, a fiber reinforced layer) and a supply of a second plastic material (for example, a cap layer) is heated to a molten condition as separated streams. These separated streams are fed to a feedblock in which the streams are brought together in face to face surface contact to form a two-ply stream which in turn is fed to a sheet die. In the sheet die the two-ply stream is spread laterally into a two-ply sheet under conditions of laminar flow, with the molten resin plies of the sheet being in face to face surface contact as they emerge from the die. The shaped two-ply sheet is then cooled and solidified, the resultant composite comprising each of the plies of the sheet integrally bonded to each other by the solidified resins comprising the sheet. Feedblock dies may be designed to accommodate multiple layers of plastic material. The viscosity of the molten plastic flow streams should be approximately the same. The viscosity match is important for proper flow conditions in the feedblock and die. Generally, if present, a lower viscosity material flows more readily and tends to encapsulate the higher viscosity material. Also, one material may flow to the edges of the sheet. The viscosity of the fiber-reinforced extrudate and the fiber-free extrudate may vary substantially, depending on the fiber concentration. The difference in viscosity between the reinforced layer and the cap layer materials does not present a substantial problem when extruding reinforced sheet having a cap on both sides because the fiber reinforced sheet is sandwiched between two layers of cap material and therefore the viscoelastic properties of both the surfaces of the sheet are the same.

However, the extrusion of a reinforced sheet having a single cap layer does present difficulties in a feedblock arrangement. Reinforced material and single layer of cap material of substantially different viscosities tend to exhibit polymer flow maldistribution, when extruded in a feedblock arrangement. The fiber-free resin tends to flow to the edge of the sheet. This also makes it difficult to build up adequate thickness of the cap layer.

In a preferred embodiment, the die type for extrusion of a reinforced sheet having a single cap layer is a multi-manifold design which keeps the two polymer flows separated until they reach the die lip, thereby controlling the shear history of each polymer layer individually. In a multi-manifold die, the partial streams are combined just before the die exit. The die may have means to adjust each melt stream individually. Adjustment of the lips or die orifice allows control of the overall gauge of the coextrudate. The method of combining the melts inside the die under pressure also improves the mutual adhesion of the layers. Another advantage of multi-manifold dies is that materials with vastly different flow behavior and melt temperatures can be processed.

Multi-Manifold dies are discussed in "Extrusion Dies for Plastics and Rubber", by Walter Michaeli, (Second Revised Edition 1992) published by Hanser Publishers. A sectional view of a three layer flat slit multi-manifold die for coextrusion is shown on page 219.

After the reinforced thermoformable sheet 21 having at least one smooth surface is extruded through the die 26, the longitudinal axes of the fibers in the reinforcing layer 22 are substantially oriented in the direction of extrusion 14. In the process in accordance with the present invention, the extrusion conditions result in orientation of the fibers in the reinforcing layer 22 in the longitudinal direction 14 as they pass through the die 26. Fiber orientation is in part due to die configuration and processing conditions in the extruder 5 and the sheet forming die 26 wherein the individual unmatted fibers are able to align themselves in the direction of flow as they pass through the die 26.

For example, it is believed that the use of temperatures which are sufficiently high so as to provide a low polymer viscosity, permits movement of the fibers relative to the polymer so that they can align with the direction of flow. Also, it is believed that the pressure drop through the die is sufficiently high to provide a sufficiently high velocity or flow rate to turn or orient the fibers into the direction of flow without substantial turbulence.

Additionally, use of a fiber length which is substantially greater than the height or slit width of the die opening causes orientation of the individual fibers in planes substantially parallel to the major surfaces of the extruded sheet. Exemplary ratios of fiber length to die opening height are from about 1.5:1 to about 20:1, preferably from about 3:1 to about 12:1.

Further orientation is also due to embodiments of the invention wherein tension is applied to the reinforced sheet 21 having at least one smooth surface to orient the fibers in the direction of extrusion 14. It is believed that the application of longitudinal tension to the thermoplastic sheet may cause the thermoplastic to exert longitudinally directed forces upon fibers to turn or orient their longitudinal axes in the direction of extrusion or tension.

In embodiments of the invention the process of forming a substantially flat, reinforced thermoformable sheet 21 having at least one smooth surface comprises a step wherein tension is applied to orient the fibers in the extruded sheet 21 in the longitudinal direction 14 by passing the extruded sheet 21 through at least one nip of a pair of counterrotating rollers, for example rollers 17 and 18 as shown in Figs. 1 and 2. In a similar manner to that shown in Figs. 1 and 2 for a single layer sheet, in embodiments of the invention the process of forming a substantially flat, reinforced thermoformable sheet 21 having at least one cap layer further comprises applying tension to reduce the dimension of the sheet in the transverse direction 19, i.e. the transverse dimension, of the extruded sheet 21. The reduction may be from about 0.5% to about 5.0% at the point of contact with the nip of the counterrotating rollers, relative to the transverse dimension of the sheet 21 at the exit of die 56.

Another means for applying tension to the uncapped sheet 1 or the sheet 21 having at least one smooth surface, is a vertical three roll stack 45, as shown in Fig. 6. In embodiments of the invention, three roll stack 45 improves or enhances the surface smoothness of the sheet 21 having at least one smooth surface. Roll 1, roll 2 and roll 3 may be heated or cooled, and in preferred embodiments they are heated to achieve the improvement of surface smoothness. The temperatures of rolls 2 and 3 should be uniform to ensure that the sheet 21 contacts equal temperature roll surfaces for an equal amount of time. The temperature of roll 1 may be maintained at a temperature close to the temperature of rolls 2 and 3. Roll 1 has a limited contact time with sheet 21. As viewed in Fig. 6, roll 1 and roll 3 rotate clockwise, and intermediate roll 2 rotates counterclockwise. Capped sheet 21 exits the die 26 moving in the direction of extrusion 14 and enters nip 1, which is between rolls 1 and 2. Counterrotating rolls 1 and 2 apply tension to orient the fibers in the reinforcing layer 22 of sheet 21. Sheet 21 travels around 1/2 the circumference of roll 2, the right side of roll 2 as shown in Fig. 6, and enters nip 2, which is between roll 2 and roll 3. Nip 2 also applies tension to orient the fibers in the direction of extrusion 14. Sheet 21 then travels around 1/2 the circumference of roll 3, the left side of roll 3 as shown in Fig. 6, and moves on in the right hand direction to be cut into individual pieces.

Proper control of the tensioning step for a capped sheet ensures that there is no slippage occurring between the point of application of the tension, the smooth surface of the at least one fiber-free cap, and the fiber containing core layer in which fibers are oriented by the tensioning step. For example, if the cap resin is too hot, the applied tension will shift the cap material rather than orient the fibers in the core because the cap resin will yield. Thus, the amount of tension applied to the core will be reduced.

The roll temperatures which may be employed depend upon the copolymer compositions. Generally, the roll temperatures are below the melting point and glass transition temperature (Tg) of the polymer which contacts the roll, so that crystallization is at least substantially avoided. Exemplary roll temperatures may range from about 75EF to about 300EF, depending upon the polymers employed.

While not intending to be bound by any explanation of the physical process by which the fibers in the reinforcing layer 22 of sheet 21 become longitudinally oriented after extrusion, it is believed that the proper extrusion conditions for each of the layers of sheet 21 contribute to the freedom of the fibers to align themselves as they move through and exit that portion of the die 26 dedicated to the reinforcing layer 22. Also, the tensile or pulling force applied by, for example, the rollers 17 and 18 or the three roll vertical stack 45 exerts longitudinally directed forces upon the individually moveable fibers to orient the fibers in the longitudinal direction 14.

In embodiments of the invention, the substantially flat, reinforced thermoformable sheet 21 comprising longitudinally oriented, unmatted individual fibers in the reinforcing layer 22 has substantially increased tensile strength in the longitudinal direction 14 in comparison to the tensile strength of the thermoformable sheet in the transverse direction 19. After the sheet 21 has been formed, and the individual fibers have been oriented in the longitudinal direction, the sheet 21 may be cut into pieces, individual sheets, or panels. The greater strength in the longitudinal direction facilitates thermoforming and bending of the sheet along a longitudinal axis and provides resistance to bending along a transverse axis. Also, orientation of the fibers along the longitudinal axis helps to reduce protrusion of fibers through the surface upon thermoforming of a bend along the longitudinal axis.

As shown in Fig. 3, reinforced sheet 21 may comprise a first fiber-free cap layer 23, and that cap layer has a surface directly bonded to the reinforcing layer 22 as well as a smooth surface opposite the surface of the cap layer that is directly bonded to the reinforcing layer. The cap layer prevents fibers from protruding through the smooth surface after thermoforming of the sheet 21 with bends in any direction. As shown in Figs. 4 and 5, reinforced sheet 21 may comprise a first fiber-free cap layer 23 and a second fiber-free cap layer 33. Cap layer 33 also has a surface directly bonded to the reinforcing layer 22 as well as a smooth surface opposite the surface of the cap layer that is directly bonded to the reinforcing layer. These cap layers prevent fibers from protruding through their smooth surfaces after thermoforming of the sheet 21 comprising two cap layers. Both cap layers 23 and 33 may be the same or different thermoplastic as the thermoplastic contained in the reinforcing layer 22.

The substantially flat reinforced sheet in accordance with the present invention may comprise a single extruded core layer comprising a thermoplastic polymer reinforced with essentially only unmatted, individual fibers. At least a substantial portion of the individual fibers are substantially oriented in the longitudinal direction or direction of extrusion so as to substantially increase the strength of the sheet in the longitudinal direction versus the strength of the sheet in the transverse direction. The ratio of the tensile strength of the sheet in the longitudinal direction to the tensile strength of the sheet in the transverse direction may be from about 1.1:1 to about 10:1, preferably from about 2:1 to about 4:1. Also, the strength of the extruded sheet in the longitudinal direction may be from about 30% to about 90%, preferably from about 35% to about 60%, of the strength of a reinforced sheet having an identical composition and formed from an injection molding process so as to facilitate thermoformability.

The present invention is further illustrated in the following examples. All tensile tests were conducted in accordance with ASTM D-638. All resins, fiber free or fiber containing were vacuum dried for about 2 to about 4 hours at about 80EC to about 90EC. All parts, ratios, and percentages are by weight and all temperatures are in EC, unless otherwise stated:

### EXAMPLE 1

A single layer, thermoformable, fiber-reinforced composite thermoplastic sheet was prepared in accordance with the present invention as follows:

Twenty five pounds of long fiber reinforced thermoplastic resin (LFRTP) containing about 40% glass fiber in acetal polymer, manufactured by Polymer Composites, Inc. under the trademark CELSTRAN7 was dried at 80EC for three hours under vacuum. The fiber length was about 2 inch. The dried glass filled acetal resin was then fed into a Killion extruder. The Killion single stage extruder used had a screw internal diameter of about 4 inches and a compression ratio of about 3.36. The throat cooling capacity of the extruder was used, however, the nitrogen purge was not used. The extruder motor drew a current of about 4 amperes at about 95.2 RPM while maintaining a pressure of about 600 psi. The first heating zone of the extruder was maintained at about 195EC, the second heating zone was maintained at about 200EC and the third heating zone was maintained at about 210EC. The screen pack was removed and not used, because it would remove glass fibers from the extrudate. The extrudate comprising acetal polymer and fibers was fed into an eight inch wide extrusion die at an inlet melt temperature of about 238EC and with a die temperature of about 202EC and extruded through a 50 mil die gap to orient the fibers in the longitudinal direction, i.e. the machine direction. From the die, the fiber-reinforced sheet was taken up under tension by a pair of heated nip rolls. The tension maintained by the nip rolls provided fiber orientation in the longitudinal direction. The oil tank temperature for the nip rolls was about 175EF. The fiber-reinforced composite sheet had a thickness of about 50 mils. The sheet was cut, and tested for mechanical properties. The sheet product had a tensile strength of about 6.5 KSI in the longitudinal direction and a tensile strength of about 4.6 KSI in the transverse direction, i.e. the direction perpendicular to the longitudinal direction. For comparison purposes, an ASTM standard test bar was injection molded from the same glass filled acetal resin that was extruded. The tensile strength of the injection molded sheet was about 17.4 KSI. The results are summarized in Table II.

### EXAMPLE 2

A single layer, thermoformable, fiber-reinforced composite thermoplastic sheet was prepared in accordance with the present invention as follows:

Long fiber reinforced thermoplastic resin (LFRTP) containing about 40% glass fiber in thermoplastic polyurethane polymer, manufactured by Polymer Composites, Inc. under the trademark CELSTRAN7 was fed into a Killion extruder. The fiber had a length of about 2 inch. The Killion single stage extruder used had a screw internal diameter of about 4 inches and a compression ratio of about 3.36. The extruder was equipped with throat cooling capacity, which was not used. The extruder was equipped with a nitrogen purge, which was used. The extruder motor drew a current of about 5 amperes at about 93 RPM while maintaining a pressure ranging between about 450 and about 500 psi. The first heating zone of the extruder was maintained at about 220EC, the second heating zone was maintained at about 242EC and the third heating zone was maintained at about 240EC. The screen pack was removed and not used, because it would remove glass fibers from the extrudate. The extrudate comprising thermoplastic polyurethane polymer and fibers was fed into an eight inch wide extrusion die at an inlet melt temperature of about 262EC and with a die temperature of about 240EC and extruded through a 50 mil die gap to orient the fibers in the longitudinal direction, i.e. the machine direction. From the die, the fiber-reinforced sheet was taken up under tension by a pair of heated nip rolls. The tension maintained by the nip rolls provided fiber orientation in the longitudinal direction. The oil tank temperature for the nip rolls was about 130EF. The fiber-reinforced composite sheet had a thickness of about 50 mils. The sheet was cut, and tested for mechanical properties. The sheet product had a tensile strength of about 12 KSI in the longitudinal direction and a tensile strength of about 6 KSI in the transverse direction, i.e. the direction perpendicular to the longitudinal direction. For comparison purposes, an ASTM standard test bar was injection molded from the same glass filled thermoplastic polyurethane resin that was extruded. The tensile strength of the injection molded sheet was about 29.3 KSI. The results are summarized in Table II.

### EXAMPLE 3

A single layer, thermoformable, fiber-reinforced composite thermoplastic sheet was prepared in accordance with the present invention as follows:

Long fiber reinforced thermoplastic resin (LFRTP) containing about 40% glass fiber in polypropylene polymer, manufactured by Polymer Composites, Inc. under the trademark CELSTRAN7 was fed into a 3.5 inch screw, two-stage extruder. The fiber had a length of about 2 inch. The feed throat was maintained at about room temperature. The screw cooling capacity was not used. The extrusion was conducted at about 57.4 RPM while controlling pressure at about 970 psi. The first heating zone of the extruder was maintained at about 390EF, the second heating zone was maintained at about 400EF, the third heating zone was maintained at about 410EF, the fourth heating zone was maintained at about 400EF and the fifth heating zone was maintained at about 400EF. The screen pack and melt pump were removed and not used, because the screen pack would remove fibers from the extrudate and the melt pump would break up the fibers in the extrudate. The extrudate comprising polypropylene polymer and fibers was fed into a fifty-four inch wide extrusion die at a die temperature of about 410EF and extruded through a 100 mil die gap to orient the fibers in the longitudinal direction, i.e. the machine direction. From the die, the fiber-reinforced sheet was taken up at about three feet per minute and kept under tension by three vertically stacked, heated rollers. The tension maintained by the stacked rolls provided fiber orientation in the longitudinal direction. The first and second rolls were maintained at about 190EF and the third roll was maintained at about 180EF. The two gaps between the three rolls were kept at about 120 mils. The fiber-reinforced composite sheet had a thickness of about 100 mils. The sheet was cut, and tested for mechanical properties. The sheet product had a tensile strength of about 6.30 KSI in the longitudinal direction and a tensile strength of about 2.77 KSI in the transverse direction, i.e. the direction perpendicular to the longitudinal direction. For comparison purposes, an ASTM standard test bar was injection molded from the same glass filled polypropylene resin that was extruded. The tensile strength of the injection molded sheet was about 10.9 KSI. The results are summarized in Table II.

### EXAMPLE 4

A single layer, thermoformable, fiber-reinforced composite thermoplastic sheet was prepared in accordance with the present invention as follows:

Long fiber reinforced thermoplastic resin (LFRTP) containing about 40% glass fiber in thermoplastic polyurethane polymer, manufactured by Polymer Composites, Inc. under the trademark CELSTRAN7 was fed into a 3.5 inch screw, two-stage extruder. The fiber had a length of about 2 inch. The feed throat was maintained at about room temperature. The screw cooling capacity was not used. The extrusion was conducted at about 59.2 RPM while controlling pressure at about 1560 psi. The first heating zone of the extruder was maintained at about 440EF, the second heating zone was maintained at about 450EF, the third heating zone was maintained at about 450EF, the fourth heating zone was maintained at about 440EF and the fifth heating zone was maintained at about 440EF. The screen pack and melt pump were removed and not used, because the screen pack would remove fibers from the extrudate and the melt pump would break up the fibers in the extrudate. The melt line temperature was about 488EF. The extrudate comprising thermoplastic polyurethane polymer and fibers was fed into a fifty-four inch wide extrusion die at a die temperature of about 470EF and extruded through a 100 mil die gap to orient the fibers in the longitudinal direction, i.e. the machine direction. From the die, the fiber-reinforced sheet was taken up at about three feet per minute and kept under tension by three vertically stacked, heated rollers. The tension maintained by the stacked rolls provided fiber orientation in the longitudinal direction. The first and second rolls were maintained at about 229EF and about 230E, respectively, and the third roll was maintained at about 229EF. The two gaps between the three rolls were kept at about 120 mils. The fiber-reinforced composite sheet had a thickness of about 100 mils. The sheet was cut, and tested for mechanical properties. The sheet product had a tensile strength of about 11.74 KSI in the longitudinal direction and a tensile strength of about 4.99 KSI in the transverse direction, i.e. the direction perpendicular to the longitudinal direction. For comparison purposes, an ASTM standard test bar was injection molded from the same glass filled thermoplastic polyurethane resin that was extruded. The tensile strength of the injection molded sheet was about 29.3 KSI. The results are summarized in Table II:

**TABLE II**

| **Physical Properties Of Uncapped Sheet** | | | | |
|---|---|---|---|---|
| | **Ex. 1** | **Ex. 2** | **Ex. 3** | **Ex. 4** |
| **Resin** | **Acetal** | **Polyurethane** | **Polypropylene** | **Polyurethane** |
| **% fiber (wt)** | 40% | 40% | 40% | 40% |
| **Thickness (mil)** | 50 | 50 | 100 | 100 |
| **A=Tensile Strength (KSI) Longitudinal** | 6.5 | 12 | 6.30 | 11.74 |
| **B=Tensile Strength (KSI) Transverse** | 4.6 | 6 | 2.77 | 4.99 |
| **Ratio A:B (B=1)** | 1.4:1 | 2:1 | 2.3:1 | 2.35:1 |
| **C=Injection molded Tensile Strength (KSI)** | 17.4 | 29.3 | 10.9 | 29.3 |
| **A/C (%)** | 37.35 | 40.95 | 57.80 | 40.07 |

### EXAMPLE 5

This example demonstrates that the process in accordance with the present invention results in an at least substantially uniform product across its width, with longitudinal orientation of the individual unmatted fibers occurring at least substantially uniformly and evenly across the width of the sheet. A 54 inch wide uncapped polypropylene sheet reinforced with 40% by weight glass fibers made in accordance with Example 3 was cut into five equal portions spaced across the transverse dimension, or width, of the sheet and labelled specimens 1-5. The thickness of specimens 1-5 in inches was 0.095, 0.095, 0.096, 0.096 and 0.096, respectively. This resulted in an average thickness of 0.096" and a standard deviation of 0.001. The tensile stress of specimens 1-5 was measured in accordance with ASTM D-638 and resulted in values of 5.689, 5.781, 5.483, 5.544 and 5.850 KSI for specimens 1-5, respectively. The average value was 5.669 KSI and the standard deviation was 0.153.

### EXAMPLE 6

A single layer, thermoformable, fiber-reinforced composite thermoplastic sheet was prepared in accordance with the present invention as follows:

Long fiber reinforced thermoplastic resin (LFRTP) containing about 40% carbon fiber in heat stabilized nylon 66 polymer, manufactured by Polymer Composites, Inc. under the trademark CELSTRAN7 was fed into a Killion extruder. The fiber had a length of about 2 inch. The Killion single stage extruder was equipped with a nylon screw to allow extrusion of the fiber-filled nylon polymer without thermal degradation. The extruder was also equipped with throat cooling capacity and a nitrogen purge, which were both used. The extruder motor drew a current of about 11.5 amperes at about 103.5 RPM while maintaining a pressure of about 1000 psi. The first heating zone of the extruder was maintained at about 282EC, the second heating zone was maintained at about 290EC and the third heating zone was maintained at about 292EC. The screen pack was removed and not used, because it would remove fibers from the extrudate. The extrudate comprising heat stabilized nylon 66 polymer and carbon fibers was fed into an eight inch wide extrusion die at an inlet melt temperature of about 318EC and with a die temperature of about 280EC and extruded through a 40 mil die gap to orient the fibers in she longitudinal direction, i.e. the machine direction. From the die, the fiber-reinforced sheet was taken up under tension by a pair of heated nip rolls. The tension maintained by the nip rolls provided fiber orientation in the longitudinal direction. The oil tank temperature for the nip rolls was about 82EF. The fiber-reinforced composite sheet had a thickness of about 43 mils. The sheet was cut, and tested for volume resistivity after conditioning for over 40 hours at about 50% relative humidity and about 23EC. A voltage of about 0.05V was applied to the sheet with a Keithley 487 picometer/voltage source and measurements were taken with a Beckman Digital Multimeter Tech. 310. Volume resistivity was calculated at E0 ohm-cm. The 40% carbon fiber/nylon 66 reinforced sheet obtained was electrically conductive and suitable for EMI shielding applications.

### EXAMPLE 7

A single layer, thermoformable, fiber-reinforced composite thermoplastic sheet was prepared in accordance with the present invention as follows:

Long fiber reinforced thermoplastic resin (LFRTP) containing about 6% stainless steel fiber in polycarbonate/ABS copolymer, manufactured by Polymer Composites, Inc. under the trademark CELSTRAN7 was fed into a Killion extruder. The fiber had a length of about 2 inch. The Killion single stage extruder was equipped with a 2 inch ID screw and had a compression ratio of about 3.36. The extruder was also equipped with throat cooling capacity and a nitrogen purge, of which only the nitrogen purge was used. The extruder motor drew a current of about 4 amperes at about 79.3 RPM while maintaining a pressure of about 650 psi. The first heating zone of the extruder was maintained at about 260EC, the second heating zone was maintained at about 263EC and the third heating zone was maintained at about 272EC. The screen pack was removed and not used, because it would remove the fibers from the extrudate. The extrudate comprising polycarbonate/ABS copolymer and stainless steel fibers was fed into an eight inch wide extrusion die at an inlet melt temperature of about 295EC and with a die temperature of about 280EC and extruded through a 40 mil die gap to orient the fibers in the longitudinal direction, i.e. the machine direction. From the die, the fiber-reinforced sheet was taken up under tension by a pair of heated nip rolls. The tension maintained by the nip rolls provided fiber orientation in the longitudinal direction. The oil tank temperature for the nip rolls was about 120EF. The fiber-reinforced composite sheet had a thickness of about 51 mils. The sheet was cut, and tested for volume resistivity after conditioning for over 40 hours at about 50% relative humidity and about 23EC. The specimens were cleaned with methyl alcohol, and Balsbaugh compliant electrodes were used and electrification was for about one minute and dissipation time was about four minutes. Volume resistivity was about E5 ohm-cm to about E6 ohm-cm. The about 6% stainless steel fiber with polycarbonate/ABS polymer sheet obtained was electrically conductive and suitable for EMI shielding applications.

### EXAMPLE 8

A two layer, thermoformable, fiber-reinforced composite thermoplastic sheet having a fiber-free cap was prepared in accordance with the present invention as follows:

Long fiber reinforced thermoplastic resin (LFRTP) containing about 40% glass fiber in polypropylene polymer, manufactured by Polymer Composites, Inc. under the trademark CELSTRAN7 was fed into a 3.5 inch screw, two-stage extruder to form a fiber-reinforced extrudate. The fiber had a length of about 2 inch. The feed throat was maintained at about room temperature. The screw cooling capacity was not used. The extrusion was conducted at about 57.4 RPM while controlling pressure at about 970 psi. The first heating zone of the extruder was maintained at about 390EF, the second heating zone was maintained at about 400EF, the third heating zone was maintained at about 410EF, the fourth heating zone was maintained at about 400EF and the fifth heating zone was maintained at about 400EF. The screen pack and melt pump were removed and not used, because the screen pack would remove fibers from the extrudate and the melt pump would break up the fibers in the extrudate. The melt line temperature was about 418EF.

Black polypropylene fiber-free material comprising Huntsman P4C5Z-027 polypropylene resin having a melt flow index of 20 and less than about 1% Reed Spectrum Carbon Black CPP15939 was fed into a 2.0 inch screw, two-stage extruder to form a fiber-free extrudate. The feed throat was maintained at about room temperature. The screw cooling capacity was not used. The extrusion was conducted at about 60.8 RPM while controlling pressure at about 470 psi. The first heating zone of the extruder was maintained at about 390EF, the second heating zone was maintained at about 399EF, the third heating zone was maintained at about 399EF, the fourth heating zone was maintained at about 401EF and the fifth heating zone was maintained at about 401EF. The melt line temperature was about 395EF.

The fiber-reinforced extrudate and the fiber-free extrudate were fed into a Cloeren coextrusion feedblock having a temperature of about 411EF and through a fifty-four inch wide extrusion die at a die temperature of about 410EF and extruded through a 100 mil die gap to orient the fibers in the fiber reinforced core in the longitudinal direction, i.e. the machine direction. The core thickness was about 90 mils and the fiber-free cap thickness was about 10 mils. The fiber-reinforced composite sheet comprising a fiber-reinforced core layer and a fiber-free cap layer had a thickness of about 100 mils. From the die, the fiber-reinforced sheet was taken up at about three feet per minute and kept under tension by three vertically stacked, heated rollers. The tension maintained by the stacked rolls provided fiber orientation in the longitudinal direction. The first and second rolls were maintained at about 190EF, and the third roll was maintained at about 180EF. The two gaps between the three rolls were kept at about 120 mils. The sheet was cut, and tested for mechanical properties. The sheet product had a tensile strength of about 6.27 KSI in the longitudinal direction and a tensile strength of about 3.06 KSI in the transverse direction, i.e. the direction perpendicular to the longitudinal direction. The results are summarized in Table III.

### EXAMPLE 9

A two layer, thermoformable, fiber-reinforced composite thermoplastic sheet having a fiber-free cap was prepared in accordance with the present invention as follows:

Long fiber reinforced thermoplastic resin (LFRTP) containing about 40% glass fiber in polypropylene polymer, manufactured by Polymer Composites, Inc. under the trademark CELSTRAN7 was fed into a 3.5 inch screw, two-stage extruder to form a fiber-reinforced extrudate. The fiber had a length of about 2 inch. The feed throat was maintained at about room temperature. The screw cooling capacity was not used. The extrusion was conducted at about 59.2 RPM while controlling pressure at about 900 psi. The first heating zone of the extruder was maintained at about 390EF, the second heating zone was maintained at about 400EF, the third heating zone was maintained at about 410EF, the fourth heating zone was maintained at about 400EF and the fifth heating zone was maintained at about 400EF. The screen pack and melt pump were removed and not used, because the screen pack would remove fibers from the extrudate and the melt pump would break up the fibers in the extrudate. The melt line temperature was about 418EF.

Black polypropylene fiber-free material comprising Huntsman P4G4Z-011 polypropylene resin having a melt flow index of 12 and less than about 1% Reed Spectrum Carbon Black CPP15939 was fed into a 2.0 inch screw, two-stage extruder to form a fiber-free extrudate. The feed throat was maintained at about room temperature. The screw cooling capacity was not used. The extrusion was conducted at about 106.1 RPM while controlling pressure at about 630 psi. The first heating zone of the extruder was maintained at about 389EF, the second heating zone was maintained at about 399EF, the third heating zone was maintained at about 401EF, the fourth heating zone was maintained at about 400EF and the fifth heating zone was maintained at about 401EF. The melt line temperature was about 400EF.

The fiber-reinforced extrudate and the fiber-free extrudate were fed into a Cloeren coextrusion feedblock having a temperature of about 410EF and through a fifty-four inch wide extrusion die at a die temperature of about 410EF and extruded through a 100 mil die gap to orient the fibers in the fiber reinforced core in the longitudinal direction, i.e. the machine direction. The core thickness was about 80 mils and the fiber-free cap thickness was about 20 mils. The fiber-reinforced composite sheet comprising a fiber-reinforced core layer and a fiber-free cap layer had a thickness of about 100 mils. From the die, the fiber-reinforced sheet was taken up at about three feet per minute and kept under tension by three vertically stacked, heated rollers. The tension maintained by the stacked rolls provided fiber orientation in the longitudinal direction. The first roll was maintained at about 200EF, and the second and third rolls were maintained at about 190EF. The two gaps between the three rolls were kept at about 120 mils. The sheet was cut, and tested for mechanical properties. The sheet product had a tensile strength of about 6.26 KSI in the longitudinal direction and a tensile strength of about 3.15 KSI in the transverse direction, i.e. the direction perpendicular to the longitudinal direction.

### EXAMPLE 10

A two layer, thermoformable, fiber-reinforced composite thermoplastic sheet having a fiber-free cap was prepared in accordance with the present invention as follows:

Long fiber reinforced thermoplastic resin (LFRTP) containing about 40% glass fiber in polyurethane polymer, manufactured by Polymer Composites, Inc. under the trademark CELSTRAN7 was fed into a 3.5 inch screw, two-stage extruder to form a fiber-reinforced extrudate. The fiber had a length of about 2 inch. The feed throat was maintained at about room temperature. The screw cooling capacity was not used. The extrusion was conducted at about 59.2 RPM while controlling pressure at about 1400 psi. The first heating zone of the extruder was maintained at about 440EF, the second heating zone was maintained at about 450EF, the third heating zone was maintained at about 450EF, the fourth heating zone was maintained at about 440EF and the fifth heating zone was maintained at about 441EF. The screen pack and melt pump were removed and not used, because the screen pack would remove fibers from the extrudate and the melt pump would break up the fibers in the extrudate. The melt line temperature was about 485EF.

Black polyurethane fiber-free material comprising Prevail 3100 polyurethane resin and less than about 1% Americhem Carbon Black 9956-E2 was fed into a 2.0 inch screw, two-stage extruder to form a fiber-free extrudate. The feed throat was maintained at about room temperature. The screw cooling capacity was not used. The extrusion was conducted at about 106.1 RPM while controlling pressure at about 430 psi. The first heating zone of the extruder was maintained at about 439EF, the second heating zone was maintained at about 450EF, the third heating zone was maintained at about 454EF, the fourth heating zone was maintained at about 451EF and the fifth heating zone was maintained at about 453EF. The melt line temperature was about 444EF.

The fiber-reinforced extrudate and the fiber-free extrudate were fed into a Cloeren coextrusion feedblock having a temperature of about 464EF and through a fifty-four inch wide extrusion die at a die temperature of about 460EF and extruded through a 100 mil die gap to orient the fibers in the fiber reinforced core in the longitudinal direction, i.e. the machine direction. The core thickness was about 90 mils and the fiber-free cap thickness was about 10 mils. The fiber-reinforced composite sheet comprising a fiber-reinforced core layer and a fiber-free cap layer had a thickness of about 100 mils. From the die, the fiber-reinforced sheet was taken up at about three feet per minute and kept under tension by three vertically stacked, heated rollers. The tension maintained by the stacked rolls provided fiber orientation in the longitudinal direction. The first roll was maintained at about 200EF, and the second and third rolls were maintained at about 190EF. The two gaps between the three rolls were kept at about 120 mils. The sheet was cut, and tested for mechanical properties. The sheet product had a tensile strength of about 10.5 KSI in the longitudinal direction and a tensile strength of about 3.85 KSI in the transverse direction, i.e. the direction perpendicular to the longitudinal direction. The results are summarized in Table III.

### EXAMPLE 11

A two layer, thermoformable, fiber-reinforced composite thermoplastic sheet having a fiber-free cap was prepared in accordance with the present invention as follows:

Long fiber reinforced thermoplastic resin (LFRTP) containing about 40% glass fiber in polyurethane polymer, manufactured by Polymer Composites, Inc. under the trademark CELSTRAN7 was fed into a 3.5 inch screw, two-stage extruder to form a fiber-reinforced extrudate. The fiber had a length of about 2 inch. The feed throat was maintained at about room temperature. The screw cooling capacity was not used. The extrusion was conducted at about 59.4 RPM while controlling pressure at about 1550 psi. The first heating zone of the extruder was maintained at about 440EF, the second heating zone was maintained at about 450EF, the third heating zone was maintained at about 450EF, the fourth heating zone was maintained at about 440EF and the fifth heating zone was maintained at about 440EF. The screen pack and melt pump were removed and not used, because the screen pack would remove fibers from the extrudate and the melt pump would break up the fibers in the extrudate. The melt line temperature was about 485EF.

Black polyurethane fiber-free material comprising Prevail 3150 polyurethane resin and less than about 1% Americhem Carbon Black 9956-E2 was fed into a 2.0 inch screw, two-stage extruder to form a fiber-free extrudate. The feed throat was maintained at about room temperature. The screw cooling capacity was not used. The extrusion was conducted at about 129.1 RPM while controlling pressure at about 530 psi. The first heating zone of the extruder was maintained at about 440EF, the second heating zone was maintained at about 450EF, the third heating zone was maintained at about 450EF, the fourth heating zone was maintained at about 450EF and the fifth heating zone was maintained at about 450EF. The melt line temperature was about 448EF.

The fiber-reinforced extrudate and the fiber-free extrudate were fed into a Cloeren coextrusion feedblock having a temperature of about 464EF and through a fifty-four inch wide extrusion die at a die temperature of about 460EF and extruded through a 100 mil die gap to orient the fibers in the fiber reinforced core in the longitudinal direction, i.e. the machine direction. The core thickness was about 90 mils and the fiber-free cap thickness was about 10 mils. The fiber-reinforced composite sheet comprising a fiber-reinforced core layer and a fiber-free cap layer had a thickness of about 100 mils. From the die, the fiber-reinforced sheet was taken up at about three feet per minute and kept under tension by three vertically stacked, heated rollers. The tension maintained by the stacked rolls provided fiber orientation in the longitudinal direction. The first and third rolls were maintained at about 211EF, and the second roll was maintained at about 209EF. The two gaps between the three rolls were kept at about 120 mils. The sheet was cut, and tested for mechanical properties. The sheet product had a tensile strength of about 8.9 KSI in the longitudinal direction and a tensile strength of about 2.11 KSI in the transverse direction, i.e. the direction perpendicular to the longitudinal direction. The results are summarized in Table III:

**Table III**

| **Physical Properties Of Single Side Capped Sheet** | | | | |
|---|---|---|---|---|
| | **Ex. 8** | **Ex. 9** | **Ex. 10** | **Ex. 11** |
| **Core Resin** | **Polypropylene** | **Polypropylene** | **Polyurethane** | **Polyurethane** |
| **% fiber** | 40% | 40% | 40% | 40% |
| **Cap resin** | Polypropylene | Polypropylene | Polyurethane | Polyurethane |
| **Core thickness (mil)** | 90 | 80 | 90 | 90 |
| **Cap thickness (mil)** | 10 | 20 | 10 | 10 |
| **Sheet thickness (mil)** | 100 | 100 | 100 | 100 |
| **A=Tensile Strength (KSI) Longitudinal** | 6.27 | 6.26 | 10.5 | 8.9 |
| **B=Tensile Strength (KSI) Transverse** | 3.06 | 3.15 | 3.85 | 2.11 |
| **Ratio A:B (B=1)** | 2.05:1 | 1.99:1 | 2.73:1 | 4.22:1 |

### EXAMPLE 12

A three layer, thermoformable, fiber-reinforced composite thermoplastic sheet having a fiber-free cap layer on both sides of a fiber-reinforced core layer was prepared in accordance with the present invention as follows:

Long fiber reinforced thermplastic resin (LFRTP) containing about 30% glass fiber in polypropylene polymer, manufactured by Polymer Composites, Inc. under the trademark CELSTRAN7 was fed into a 3.5 inch screw, two-stage extruder to form a fiber-reinforced extrudate. The fiber had a length of about 2 inch. The feed throat was maintained at about 52EC. The screw cooling capacity was not used. The extrusion was conducted under manual RPM control to provide a pressure of about 700 psi. The extruder vent was plugged. The first heating zone of the extruder was maintained at about 190EC, the second heating zone was maintained at about 193EC, the third heating zone was maintained at about 202EC, the fourth heating zone was maintained at about 201EC, the fifth heating zone was maintained at about 205EC, the sixth heating zone was maintained at about 202EC, and the seventh heating zone was maintained at about 210EC. The screen pack and melt pump were removed and not used, because the screen pack would remove fibers from the extrudate and the melt pump would break up the fibers in the extrudate. The melt line temperature was about 188EC.

Black polypropylene fiber-free material comprising Huntsman P4G4Z-011 polypropylene resin having a melt flow index of about 12 and less than about 1% Reed Spectrum Carbon Black CPP15939 was fed into a 2.0 inch screw, two-stage extruder to form a fiber-free extrudate. The feed throat was maintained at about 40EC. The screw cooling capacity was not used. The extrusion was conducted under manual RPM control to provide a pressure of about 520 psi. The first heating zone of the extruder was maintained at about 185EC, the second heating zone was maintained at about 187EC, and the third, fourth, fifth and sixth heating zones were maintained at about 182EC. The melt line temperature was about 186EC.

The fiber-reinforced extrudate and the fiber-free extrudate were fed into a Cloeren coextrusion feedblock having a BAAAB flow splitting insert wherein the fiber free extrudate was split into two streams flowing on the top and bottom sides of the fiber reinforced extrudate. The feedblock temperature was about 180EC. The three layered material was extruded through a 24 inch die having a temperature of about 190EC and a die gap of about 150 mils to orient the fibers in the fiber reinforced core in the longitudinal direction, i.e. the machine direction. The fiber reinforced core thickness was about 100 mils and the thickness of the two fiber-free caps was about 25 mils each. The fiber-reinforced composite sheet comprising a fiber-reinforced core layer and a fiber-free cap layer on the top and bottom was about 150 mils. From the die, the fiber-reinforced sheet was taken up at about three feet per minute and kept under tension by three vertically stacked, heated rollers. The tension maintained by the stacked rolls provides for fiber orientation in the longitudinal direction. The first and second rolls were maintained at about 95EC, and the third roll was maintained at about 125EC. The first gap between the first and second rollers was maintained at about 150 mils. The nip pressure was about 250 psi. A three layer laminated sheet having smooth surfaces on both sides was obtained.

### EXAMPLE 13

A three layer, thermoformable, fiber-reinforced composite thermoplastic sheet having a fiber-free cap layer on both sides of a fiber-reinforced core layer was prepared in accordance with the present invention as follows:

Long fiber reinforced thermoplastic resin (LFRTP) containing about 30% glass fiber in polypropylene polymer, manufactured by Polymer Composites, Inc. under the trademark CELSTRAN7 was fed into a 3.5 inch screw, two-stage extruder to form a fiber-reinforced extrudate. The fiber had a length of about 2 inch. The feed throat was maintained at about 47EC. The screw cooling capacity was not used. The extrusion was conducted under manual RPM control to provide a pressure of about 710 psi. The extruder vent was plugged. The first heating zone of the extruder was maintained at about 190EC, the second heating zone was maintained at about 193EC, and the third, fourth, fifth, sixth and seventh heating zones were maintained at about 210EC. The screen pack and melt pump were removed and not used, because the screen pack would remove fibers from the extrudate and the melt pump would break up the fibers in the extrudate. The melt line temperature was about 201EC.

Black polypropylene fiber-free material comprising Huntsman P4G4Z-011 polypropylene resin having a melt flow index of about 12 and less than about 1% Reed Spectrum Carbon Black CPP15939 was fed into a 2.0" screw, two-stage extruder to form a fiber-free extrudate. The feed throat was maintained at about 40EC. The screw cooling capacity was not used. The extrusion was conducted under manual RPM control to provide a pressure of about 970 psi. The first heating zone of the extruder was maintained at about 185EC, the second heating zone was maintained at about 187EC, and the third, fourth, fifth and sixth heating zones were maintained at about 185EC. The melt line temperature was about 185EC.

The fiber-reinforced extrudate and the fiber-free extrudate were fed into a Cloeren coextrusion feedblock having a BAAAB flow splitting insert wherein the fiber free extrudate was split into two streams flowing on the top and bottom sides of the fiber reinforced extrudate. The feedblock temperature was about 180EC. The three layered material was extruded through a 24 inch die having a temperature of about 190EC and a die gap of about 150 mils to orient the fibers in the fiber reinforced core in the longitudinal direction, i.e. the machine direction. The fiber reinforced core thickness was about 50 mils and the thickness of the two fiber-free caps was about 50 mils each. The fiber-reinforced composite sheet comprising a fiber-reinforced core layer and a fiber-free cap layer on the top and bottom was about 150 mils. From the die, the fiber-reinforced sheet was taken up at about three feet per minute and kept under tension by three vertically stacked, heated rollers. The tension maintained by the stacked rolls provided fiber orientation in the longitudinal direction. The first and second rolls were maintained at about 101EC and about 114EC, respectively, and the third roll was maintained at about 125EC. The first gap between the first and second rollers was maintained at about 150 mils. The nip pressure was about 250 psi. A three layer laminate sheet having smooth surfaces on both sides was obtained.

## Claims

1. A substantially flat, reinforced thermoformable sheet comprising:
a single extruded core layer comprising a thermoplastic polymer reinforced with unmatted, individual fibers wherein said individual fibers are substantially oriented in one direction to substantially increase the strength of the thermoformable sheet in said one direction in comparison to the strength of the thermoformable sheet in a transverse direction to said one direction.

2. A substantially flat, reinforced thermoformable sheet as claimed in claim 1 further comprising at least one fiber-free thermoplastic cap layer directly bonded to said single extruded core layer.

3. A substantially flat, reinforced thermoformable sheet as claimed in claim 2 wherein said reinforced thermoplastic core layer and said at least one thermoplastic fiber-free cap layer are the same thermoplastic.

4. A substantially flat, reinforced thermoformable sheet as claimed in claim 2 wherein a fiber-free cap layer is directly bonded to opposing surfaces of said core layer.

5. A substantially flat, reinforced thermoformable sheet as claimed in claim 1 further comprising only one fiber-free cap layer having a surface directly bonded to said core layer and a smooth surface opposite said directly bonded surface, said cap layer preventing fibers from protruding through said smooth surface after thermoforming of said sheet.

6. A substantially flat, reinforced thermoformable sheet as claimed in claim 1 wherein said sheet is at least substantially free from air bubbles or pin holes due to said unmatted, individual fibers being at least substantially impregnated with said thermoplastic.

7. A substantially flat, reinforced thermoformable sheet as claimed in claim 1 wherein said sheet has a longitudinal axis and a transverse axis, at least a substantial portion of said individual fibers having their longitudinal axes oriented in the direction of the longitudinal axis of said sheet, said greater strength facilitating thermoforming and bending of said sheet along said longitudinal axis of said sheet and providing resistance to bending along said transverse axis.

8. A substantially flat, reinforced thermoformable sheet as claimed in claim 1 wherein said core comprises from about 5 per cent by weight to about 60 percent by weight fiber.

9. A substantially flat, reinforced thermoformable sheet as claimed in claim 1 wherein said individual fibers are from about 0.25" to about 2.5" in length.

10. A substantially flat, reinforced thermoformable sheet as claimed in claim 9 wherein said individual fibers are substantially unbroken after extrusion and are substantially the same length.

11. A substantially flat, reinforced thermoformable sheet as claimed in claim 1 wherein she ratio of said strength of the sheet in said one direction to said strength of the sheet in said transverse direction is from about 1.1:1 to about 10:1.

12. A substantially flat, reinforced thermoformable sheet as claimed in claim 11 wherein the ratio of said strength of the sheet in said one direction to said strength of the sheet in said transverse direction is from about 2:1 to about 4:1.

13. A substantially flat, reinforced thermoformable sheet as claimed in claim 1 wherein the strength of the extruded sheet in said one direction is from about 30% to about 90% of the strength of a reinforced sheet having an identical composition and formed from an injection molding process.

14. A substantially flat, reinforced thermoformable sheet as claimed in claim 13 wherein the strength of the extruded sheet in said one direction is from about 35% to about 60% of the strength of a reinforced sheet having an identical composition and formed from an injection molding process.

15. A thermoformed article formed from the sheet of claim 1.

16. A process of forming a substantially flat, reinforced thermoformable sheet comprising the steps of:
(a) feeding a composition comprising thermoplastic resin and unmatted, individual fibers into an extruder; and
(b) extruding said composition through a die to form an extruded sheet, wherein after said extruding through said die, said fibers are substantially oriented in the longitudinal direction of extrusion,
wherein said orientation of said longitudinally oriented, unmatted individual fibers substantially increase the strength of the thermoformable sheet in the longitudinal direction in comparison to the strength of the thermoformable sheet in the transverse direction.

17. A process of forming a substantially flat, reinforced thermoformable sheet as claimed in claim 16, further comprising the step of:
(c) applying tension to said extruded sheet to orient said fibers in the direction of extrusion.

18. A process of forming a substantially flat, reinforced thermoformable sheet as claimed in claim 17 wherein in step (c) said tension is applied by passing said extruded sheet through a nip of a set of rollers.

19. A process of forming a substantially flat, reinforced thermoformable sheet as claimed in claim 18 wherein step
(c) comprises reducing the transverse dimension of said extruded sheet from about 0.5% to about 5.0% at the point of contact with the rollers, relative to the transverse dimension of said sheet as it exits the die.

20. A process of forming a substantially flat, reinforced thermoformable sheet as claimed in claim 17 wherein the fiber content of said extruded sheet is from about 30% by weight to about 55% by weight.
